(19) Europäisches Patentamt
European Patent Office
Office européen des brevets

(11) Veröffentlichungsnummer: **0 126 225**
**B1**

(12) **EUROPÄISCHE PATENTSCHRIFT**

(45) Veröffentlichungstag der Patentschrift: **26.11.86**

(51) Int. Cl.⁴: **C 07 F 7/18**

(21) Anmeldenummer: **84102654.5**

(22) Anmeldetag: **12.03.84**

# (54) Verfahren zur Herstellung von substituierten Trialkylsilyloxymalonsäuredinitrilen.

(30) Priorität: **25.03.83 DE 3310954**

(43) Veröffentlichungstag der Anmeldung: **28.11.84 Patentblatt 84/48**

(45) Bekanntmachung des Hinweises auf die Patenterteilung: **26.11.86 Patentblatt 86/48**

(84) Benannte Vertragsstaaten: **BE CH DE FR GB IT LI NL**

(56) Entgegenhaltungen:
**EP-A-0 076 957**
**EP-A-0 076 985**
**GB-A-2 067 211**

**CHEMISCHE BERICHTE, Band 106, 1973; W. LIDY et al. "Spaltungsreaktionen des Trimethylsilylcyanids, eine eine neue Darstellungsmethode für O-(Trimethylsilyl)cyanhydrine", Seiten 587-593**
**Chemical Abstracts Band 79, no. 11, 17. September 1973 Columbus, Ohio, USA W. LIDY et al. "Cleavage reactions of trimethylsilyl cyanide with epoxides, carboxylic acid chlorides, chlorocarbonate esters, and sulfenyl chlorides" Seite 460, Spalte 1, Abstract Nr. 66465t**

(73) Patentinhaber: **BAYER AG, Konzernverwaltung RP Patentabteilung, D-5090 Leverkusen 1 Bayerwerk (DE)**

(72) Erfinder: **Findeisen, Kurt, Dr., In der Follmühle 10, D-5068 Odenthal (DE)**
Erfinder: **Fauss, Rudolf, Dr., Gerstenkamp 10, D-5000 Koeln 80 (DE)**

**EP 0 126 225 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft Verfahren zur Herstellung von substituierten Trimethylsilyloxymalonsäuredinitrilen.

Trimethylsilyloxymalonsäuredinitrile und Verfahren zu ihrer Herstellung sind bereits bekannt. So entsteht durch Umsetzung von Trifluoracetylchlorid mit 2 Mol Trimethylsilylcyanid das Dicyan-trifluormethyl-(trimethylsilyloxy)-methan. Andere dort beschriebene Umsetzungen von Säurechloriden mit Trimethylsilylcyanid betreffen Phosgen und Oxalylchlorid. Danach scheint die Umsetzung von Säurehalogeniden mit Trimethylsilylcyanid auf sehr reaktionsfähige Säurechloride beschränkt zu sein (Chemische Berichte, Band 106, Seite 587 - 593, 1973).

Es ist jedoch bekannt geworden, daß auch weniger reaktionsfähige Säurechloride wie Acetylchlorid und Benzoylchlorid mit Trimethylsilylcyanid zu den entsprechenden Trimethylsilyloxymalonsäuredinitrilen umgesetzt werden können. Die Umsetzung erfolgt jedoch nur bei erhöhter Temperatur und unter Zugabe eines zusätzlichen Katalysators (Pyridin). Es werden Ausbeuten von bis zu 85 % erreicht (Tetrahedron Letters Nr. 17, Seiten 1449 bis 1450, 1973).

Es war außerdem bekannt, daß bei der Umsetzung von Carbonsäurechloriden mit Trimethylsilylcyanid 2-(Trimethyl-silyloxy)-2-Propennitrile erhalten werden. Es ist ferner bekannt, daß bei der Umetzung von Säurechloriden, die in α-Stellung ein Wasserstoffatom enthalten, mit Trimethylsilylcyanid in Gegenwart von Zinkiodid als Katalysator, quantitativ das entsprechende Acylcyanid entsteht. Dieses Acylcyanid kann durch Umsetzung mit weiterem Trimethylsilylcyanid in Gegenwart von Tetrabutylammoniumiodid zum Trimethylsilyloxymalonsäuredinitril umgesetzt werden. Zum selben Ergebnis kommt man auch, wenn man das Säurechlorid mit 2 Mol Trimethylsilylcyanid in Gegenwart von Tetrabutylammoniumiodid umsetzt. Das Trimethylsilyloxymalonsäuredinitril läßt sich dann in 78 %iger Ausbeute isolieren (Chemische Berichte 115, 1982, Seiten 263 - 87).

Der Nachteil der bekannten Verfahren liegt darin, daß entweder nur sehr reaktive Carbonsäurehalogenide mit Trimethylsilylcyanid umgesetzt werden können, oder daß in Gegenwart kostspieliger Katalysatoren bzw. bei erhöhten Temperaturen und in Gegenwart von Katalysatoren gearbeitet werden muß.

Es wurde gefunden, daß man substituierte Trimethylsilyloxymalonsäuredinitrile der allgemeinen Formel (I)

$$R^1(-\overset{OSi(CH_3)_3}{\underset{CN}{C}}-CN)_n \qquad (I)$$

in welcher

$R^1$ für Phenyl steht, das gegebenenfalls ein- oder mehrfach gleich oder verschieden in m-, m'-, p-Stellung durch Chlor, Fluor, Methyl, Methoxy, Trifluormethyl, Trifluormethoxy, Brom substituiert ist,

n für eine ganze Zahl von 1 bis 4 steht,

erhält, indem man in einer ersten Stufe das Säurehalogenid der Formel (II)

$$R^1-(-\overset{O}{\overset{\|}{C}}-Hal)_n \qquad (II)$$

in welcher

$R^1$ und n die oben angegebene Bedeutung besitzen und Hal für Fluor, Chlor, Brom oder Iod steht,

mit mindestens einem Moläquivalent pro Säurehalogenidrest Trimethylsilylcyanid der Formel

$$(CH_3)_3SiCN \qquad (III)$$

bei Temperaturen von 60 bis 150°C umsetzt, das dabei entstehende Trimethylsilylhalogenid entfernt und anschließend das Reaktionsgemisch mit weiterem Trimethylsilylcyanid der Formel (III) in Gegenwart einer Base bei Temperaturen zwischen -10 und +60°C umsetzt,

oder

Acylcyanide der allgemeinen Formel (IV)

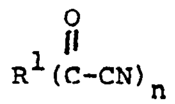 (IV)

in welcher
$R^1$ und n die oben angegebene Bedeutung haben,
mit Trimethylsilylcyanid der Formel (III) umsetzt,
wobei man mit katalytischen Mengen Basen bei Temperaturen von -10 bis +60°C arbeitet.

Weiterhin wurde ein Verfahren zur Herstellung von substituierten Trimethylsilyloxymalonsäuredinitrilen der allgemeinen Formel

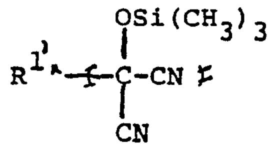 (I')

gefunden,
in welcher
$R^{1'}$ für gegebenenfalls durch Halogen und/oder $C_1$-$C_4$-Alkoxy substituiertes $C_1$-$C_8$-Alkyl steht,
indem man dimere Acylcyanide der Formel (V)

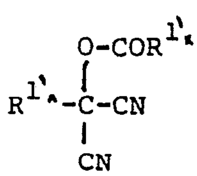 (V)

in welcher
$R^{1'}$ die oben angegebene Bedeutung besitzt,
gegebenenfalls in Mischung mit Acylcyaniden der allgemeinen Formel

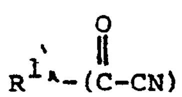 (IVa)

in welcher
$R^{1'}$ die oben angegebene Bedeutung hat,
mit Trimethylsilylcyanid der Formel

$$(CH_3)_3SiCN \qquad (III)$$

in Gegenwart katalytischer Mengen Basen bei Temperaturen zwischen 0 und 70°C umsetzt.

Beim erfindungsgemäßen Verfahren zur Herstellung von Trimethylsilyloxymalonsäuredinitrilen der Formeln (I) bzw. (I') erhält man die entsprechenden Endprodukte in extrem hoher Ausbeute, man erhält reinere Produkte als nach dem Stand der Technik zu erwarten war, d.h. störende Neben- bzw. Seitenreaktionen bleiben überraschenderweise aus.

Durch das erfindungsgemäße Verfahren wird überraschenderweise eine milde Reaktion bei Temperaturen zwischen -10 bis +60°C bzw. zwischen 0 und + 70°C in Gegenwart katalytischer Mengen Basen ermöglicht.

Die Umsetzung von aromatischen Verbindungen der Formel (II) wird nur in der Publikation Tetrahedron Letters, Band 9, Nr. 17, 1973, Seiten 1449-1450 angedeutet, jedoch nur pauschal und ohne Hinweis auf die Bedingungen des Verfahrens der vorliegenden Patentanmeldung.

Als Ausgangsverbindungen der Formel (II) kommen vorzugsweise folgende Säurehalogenide in Betracht:. Benzoylchlorid, m-Chlorbenzoylchlorid, p-Chlorbenzoylchlorid, 3,4-, 3,5-Dichlorbenzoylchlorid, 3,4,5-Trichlorbenzoylchlorid, m-, p-Trifluormethylbenzoylchlorid, m-, p-Methoxybenzoylchlorid, 3,4-Dimethoxybenzoylchlorid, m-, p-Trifluormethoxybenzoylchlorid, m-, p-Fluorbenzoylchlorid, m-, p-Brombenzoylbromid oder -chlorid, 3-Chlor-4-brombenzoylchlorid, 3-Brom-4-chlorbenzoyl-chlorid, 4-Chlor-3-methylbenzoylchlorid.

Das als Ausgangsprodukt eingesetzte Trimethylsilylcyanid der Formel (III) ist bekannt. Es kann durch Umsetzung von Trimethylsilylchlorid mit Natriumcyanid erhalten werden (siehe dazu DE-OS 3 018 821, EP-OS 40 356).

Der Substituent R1' in den Formeln (I'), (V) und (IVa) steht vorzugsweise für gegebenenfalls durch Fluor, Chlor, Brom, Methoxy oder Ethoxy substituiertes $C_{1-4}$-Alkyl.

Als basische Katalysatoren kommen bei der Umsetzung vorzugsweise in Frage:

tertiäre Amine, Alkali- oder Erdalkalihydroxide, Alkali- oder Erdalkalicarbonate, Alkali- oder Erdalkalicyanide oder die Alkali- oder Erdalkalisalze organischer Säuren. Bevorzugt seien folgende basische Katalysatoren genannt: Triethylamin, Dimethylbenzylamin, Pyridin, Tetramethylethylendiamin, Tributylamin, Dimethylbutylamin, Tetramethyl-1,3-butandiamin, Hexamethylendiethylentriamin, Tetramethyl-1,2-propylendiamin, N-Methylmorpholin, N,N'-Dimethylpiperazin, N-Methylpiperidin, 1-Dimethylamino-3-formylaminopropan, Chinolin, Natriumhydroxid, Kaliumhydroxid, Natriumcyanid, Kaliumcyanid, Natriumcarbonat, Natriumacetat sowie Gemische dieser Verbindungen.

Beim Einsatz schwerlöslicher Katalysatoren wie beispielsweise Natriumcyanid kann die Zugabe von Komplexbildnern oder Phasentransferkatalysatoren wie z.B. Kupfer-I-cyanid oder Kronenethern von Vorteil sein.

Die nach dem erfindungsgemäßen Verfahren hergestellten Verbindungen der Formeln (I) und (I') sind wichtige Ausgangsprodukte zur Herstellung insektizider und akarizider Wirkstoffe. So können sie zur Herstellung der aus der DE-OS 3 140 275 bekannten Verbindungen dienen.

Die folgenden Beispiele erläutern die vorliegende Erfindung,

**Beispiel A**

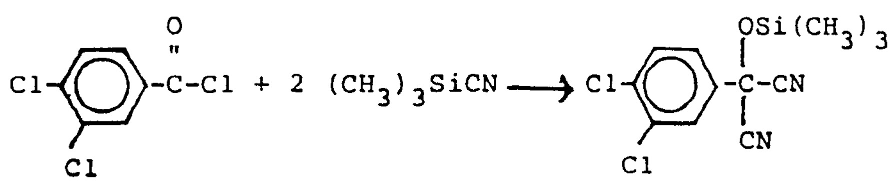

852 g 3,4-Dichlorbenzoylchlorid wurden bei 80-90°C mit 416 g Trimethylsilylcyanid versetzt und über eine 20 cm Vigreux-Kolonne das bei weiterem Heizen entstehende Trimethylsilylchlorid abdestilliert. Nachdem die Sumpftemperatur auf 120°C angestiegen war; wurden noch 100 g rimethylsilylcyanid zugegeben. Als im Sumpf kein Säurechlorid mehr vorlag (Kontrolle durch IR-Spektroskopie), wurde abgekühlt, bei 20°C mit 2 ml Triethylamin versetzt und weitere 320 g Trimethylsilylcyanid unter ühlung zugetropft. Es wurde 1 Stunde bei Raumtemperatur nachgerührt und IR-spektroskopisch kontrolliert, daß keine Carbonylbande mehr auftrat. Nach Stabilisieren mit 3 ml Benzoylchlorid wurde andestilliert.

Es blieben 1190 g Rückstand, welcher laut GC zu 98 % aus 3,4-Dichlorphenyltrimethylsilyloxymalonsäuredinitril bestand. Eine Destillation lieferte 1130 g Reinsubstanz. Kp 114-117°C 0,15 Torr 0,2 mbar.

**Beispiel B**

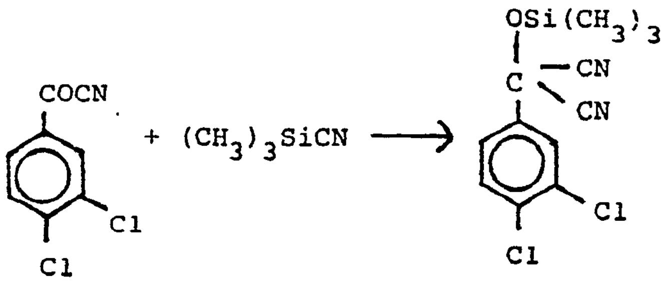

400 g 3,4-Dichlorbenzoylcyanid und 1,5 ml Triethylamin wurden bei maximal 30°C mit 200 g Trimethylsilylcyanid versetzt. Es wurde 1 Stunde nachgerührt; die Carbonylbande im IR-Spektrum war verschwunden. Der Rückstand bestand nach spektroskopischer Untersuchung aus 3,4-Dichlorphenyltrimethylsilyloxymalonsäuredinitril.

Eine Verseifung des Produktes in konzentrierter Schwefelsäure lieferte 3,4-Dichlorphenylhydroxylmalonsäurediamid.

**Beispiel C**

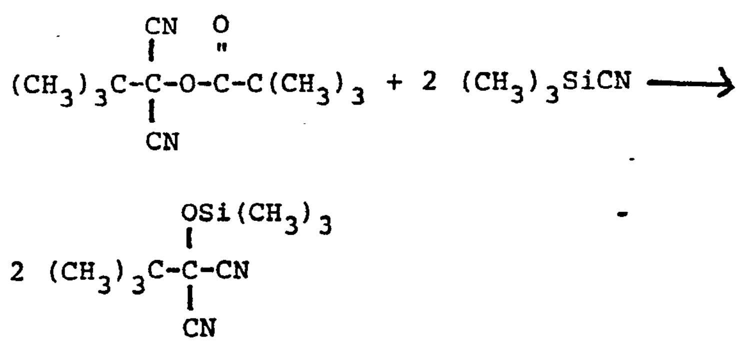

31 g dimeres Pivaloylcyanid und 30 g Trimethylsilylcyanid wurden bei Raumtemperatur mit 0,4 ml Triethylamin versetzt und die Lösung 4 Stunden gerührt. Im IR-Spektrum war keine Carbonylbande mehr zu sehen.

Nach gaschromatographischer Untersuchung mit einer Vergleichssubstanz hatte sich tert.-Butyltrimethylsilyloxymalonsäuredinitril gebildet.

**Patentansprüche**

1. Verfahren zur Herstellung von substituierten Trimethylsilyloxymalonsäuredinitrilen der allgemeinen Formel (I)

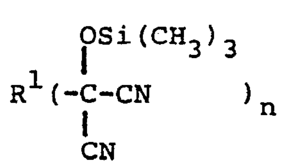

(I)

in welcher

$R^1$ für Phenyl steht, das gegebenenfalls ein- oder mehrfach gleich oder verschieden in m-, m'-, p-Stellung

durch Brom, Chlor, Fluor, Methyl, Methoxy, Trifluormethyl, Trifluormethoxy, substituiert ist,
n für eine ganze Zahl von 1 bis 4 steht,
dadurch gekennzeichnet, daß man in einer ersten Stufe das Säurehalogenid der Formel (II)

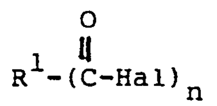 (II)

in welcher $R^1$ und n die oben angegebene Bedeutung besitzen und Hal für Fluor, Chlor, Brom oder Iod steht, mit mindestens einem Moläquivalent pro Säurehalogenidrest Trimethylsilylcyanid der Formel

$$(CH_3)_3SiCN \qquad (III)$$

bei Temperaturen von 60 bis 150°C umsetzt, das dabei entstehende Trimethylsilylhalogenid entfernt und anschließend das Reaktionsgemisch mit weiterem Trimethylsilylcyanid der Formel (III) in Gegenwart einer Base bei Temperaturen zwischen -10 und +60°C umsetzt,
oder
Acylcyanide der allgemeinen Formel (IV)

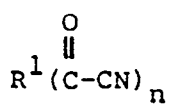 (IV)

in welcher
$R^1$ und n die oben genannte Bedeutung haben,
mit Trimethylsilylcyanid der Formel (III) umsetzt,
wobei man mit katalytischen Mengen Basen bei Temperaturen von -10 bis +60°C arbeitet.

2. Verfahren zur Herstellung von substituierten Trimethylsilyloxymalonsäuredinitrilen der allgemeinen Formel

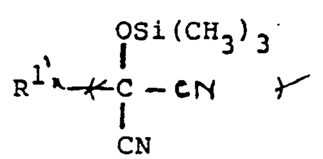 (I')

in welcher
$R^{1'}$ für gegebenenfalls durch Halogen und/oder $C_1$-$C_4$-Alkoxy substituiertes $C_1$-$C_8$-Alkyl steht,
dadurch gekennzeichnet, daß man dimere Acylcyanide der Formel (V)

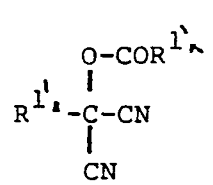 (V)

in welcher
$R^{1'}$ die oben angegebene Bedeutung besitzt,
gegebenenfalls in Mischung mit Acylcyaniden der allgemeinen Formel

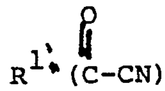 (IVa)

in welcher
$R^{1'}$ die oben angegebene Bedeutung hat,
mit Trimethylsilylcyanid der Formel

$(CH_3)_3SiCN$ (III)

in Gegenwart katalytischer Mengen Basen bei Temperaturen zwischen 0 und 70° C umsetzt.

**Claims**

1. Process for the preparation of substituted trimethylsilyloxymalonic acid dinitriles of the general formula (I)

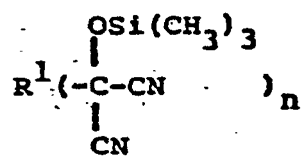 (I)

in which
$R^1$ represents phenyl which is optionally mono- or polysubstituted in the m-, m'- or p-positions by identical or different substituents from the group comprising bromine, chlorine, fluorine, methyl, methoxy, trifluoromethyl or trifluoromethoxy, and
n represents an integer from 1 to 4,
characterised in that in a first stage the acid halide of the formula (II)

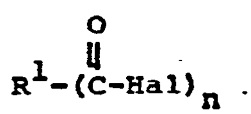 (II)

in which
$R^1$ and n have the abovementioned meaning and
Hal represents fluorine, chlorine, bromine or iodine, is reacted with at least one molar equivalent per acid halide radical of trimethylsilyl cyanide of the formula

$(CH_3)_3SiCN$ (III)

at temperatures of 60 to 150° C, the trimethylsilyl halide formed is removed and then the reaction mixture is reacted with further trimethylsilyl cyanide of the formula (III) in the presence of a base at temperatures between -10 and +60° C, or acyl cyanides of the general formula (IV)

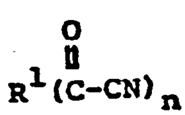 (IV)

in which
$R^1$ and n have the abovementioned meaning, are reacted with trimethylsilyl cyanide of the formula (III), the reaction being carried out with catalytic amounts of bases at temperatures of -10 to +60° C.

2. Process for the preparation of substituted trimethylsilyloxymalonic acid dinitriles of the general formula

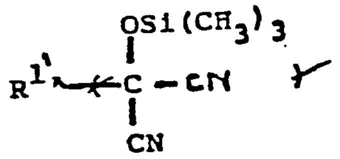 (I')

in which
$R^{1'}$ represents $C_1$-$C_8$-alkyl which is optionally substituted by halogen and/or $C_1$-$C_4$-alkoxy, characterised in that dimeric acyl cyanides of the formula (V)

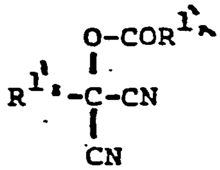 (V)

in which
$R^{1'}$ has the abovementioned meaning, if appropriate mixed with acyl cyanides of the general formula

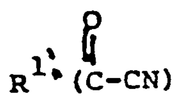 (IVa)

in which
$R^{1'}$ has the abovementioned meaning, are reacted with trimethylsilyl cyanide of the formula

$$(CH_3)_3SiCN \qquad (III)$$

in the presence of catalytic amounts of bases at temperatures between 0 and 70° C.

**Revendications**

1. Procédé de préparation de dinitriles triméthylsilyloxymaloniques substitués de formule générale I

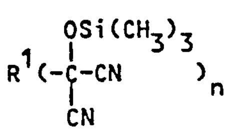 (I)

dans laquelle
$R^1$ représente un groupe phényle portant éventuellement un ou plusieurs substituants identiques ou différents choisis parmi le brome, le chlore, le fluor, les groupes méthyle, méthoxy, trifluorométhyle, trifluorométhoxy dans les positions m, m' et p, n est un nombre entier de 1 à 4,
caractérisé en ce que, dans un premier stade opératoire, on fait réagir l'halogénure d'acide de formule II

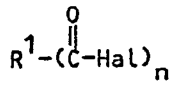

(II)

dans laquelle

$R^1$ et n ont les significations indiquées ci-dessus, et

Hal représente le fluor, le chlore, le brome ou l'iode, avec au moins un équivalent molaire, par groupe halogénure d'acide, de cyanure de triméthylsilyle de formule

$(CH_3)_3SiCN$ (III)

à des températures de 60 à 150° C, on élimine l'halogénure de triméthylsilyle formé dans cette réaction puis on fait réagir le mélange de réaction avec des compléments de cyanure de triméthylsilyle de formule III en présence d'une base à des températures de -10 à +60° C,

ou bien

on fait réagir des cyanures d'acyle de formule générale IV

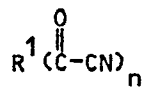

(IV)

dans laquelle

$R^1$ et n ont les significations indiquées ci-dessus, avec le cyanure de triméthylsilyle de formule III, en opérant avec des quantités catalytiques de bases à des températures de -10 à +60° C.

2. Procédé de préparation de dinitriles triméthylsilyloxymaloniques substitués de formule générale

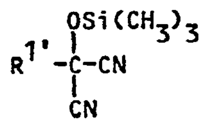

(I')

dans laquelle

$R^{1'}$ représente un groupe alkyle en $C_1$-$C_8$ éventuellement substitué par des halogènes et/ou des groupes alcoxy en $C_1$-$C_4$,

caractérisé en ce que l'on fait réagir des cyanures d'acyle dimères de formule V

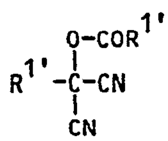

(V)

dans laquelle

$R^1$ a les significations indiquées ci-dessus, éventuellement en mélange avec des cyanures d'acyle de formule générale

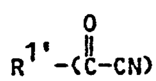

(IVa)

dans laquelle

$R^{1'}$ a les significations indiquées ci-dessus, avec le cyanure de triméthylsilyle de formule

$(CH_3)_3SiCN$ (III)

en présence de quantités catalytiques de bases à des températures de 0 à 70° C.